# EUROPÄISCHE PATENTSCHRIFT

(11) **EP 3 615 274 B1**
(45) Veröffentlichungstag und Bekanntmachung des Hinweises auf die Patenterteilung: **03.03.2021**
(21) Anmeldenummer: 18717387.7
(22) Anmeldetag: 19.04.2018
(51) Int. Cl.: B25F 5/02, H01M 2/00

(54) **VERSETZTE KONTAKTE AN EINEM AKKUMULATOR**
OFFSET CONTACTS ON A BATTERY
CONTACTS EN QUINCONCE SUR UN ACCUMULATEUR

(30) Priorität: 26.04.2017 EP 17168102
(43) Veröffentlichungstag der Anmeldung: 04.03.2020
(73) Patentinhaber: Hilti Aktiengesellschaft, 9494 Schaan (LI)
(72) Erfinder: MEIXNER, Ralf, 87656 Germaringen (DE); STEMPFHUBER, Johannes, 86919 Utting am Ammersee (DE)
(74) Vertreter: Hilti Aktiengesellschaft Corporate Intellectual Property
(86) Internationale Anmeldenummer: PCT/EP2018/060064
(87) Internationale Veröffentlichungsnummer: WO 2018/197335

(56) Entgegenhaltungen:
- DE-A1-102010 063 077
- US-A1- 2008 272 760
- US-A1- 2011 012 560
- US-A1- 2015 151 423

## Beschreibung

Die vorliegende Erfindung betrifft eine Werkzeugmaschine, beispielsweise eine Bohrmaschine, enthaltend eine Aufnahmevorrichtung mit wenigstens einem ersten und zweiten Leistungsaufnahmeelement und eine mit der Werkzeugmaschine verbindbare Energieversorgungseinheit, beispielsweise einen Akkumulator, mit einer Anschlusseinrichtung, wobei die Anschlusseinrichtung wenigstens ein erstes und zweites Leistungsabgabeelement enthält, wobei die Aufnahmevorrichtung ausgestaltet ist, um die Anschlusseinrichtung aufzunehmen und zu halten, sodass die Leistungsaufnahmeelemente und die Leistungsabgabeelemente zum Herstellen einer elektrischen Verbindung miteinander verbindbar sind.

Kabellose Werkzeugmaschine können zur Stromversorgung mit einem Akkumulator betrieben werden. Der Akkumulator ist dabei von der Werkzeugmaschine abnehmbar, um diesen in einer Ladevorrichtung wieder mit elektrischem Strom aufladen zu können Ein Beispiel wird in der US2011012560A1 dargestellt.

Aufgrund der stetigen Weiterentwicklung von Zell- und Akkutechnologie können kabellose Werkzeugmaschinen mit immer größeren Leistungen realisiert werden. Für diese Leistungssteigerungen muss zwangsläufig immer mehr elektrische Energie bzw. elektrischer Strom aus den Akkus der Werkzeugmaschine zur Verfügung gestellt werden. Zur Übertragung der elektrischen Energie wird mittlerweile eine Vielzahl an Kontaktelementen als Schnittstelle zwischen dem Akkumulator und der Werkzeugmaschine verwendet.

Um die Dimensionen bzw. das Ausmaß der Schnittstelle zwischen dem Akkumulator und der Werkzeugmaschine möglichst klein und kompakt zu halten, werden die einzelnen Kontaktelemente möglichst dicht neben einander an der Schnittstelle positioniert. Durch den hohen Energiefluss bzw. die hohen elektrischen Ströme, die von dem Akkumulator zu der Werkzeugmaschine durch die Kontaktelemente fließen, kann es zu einer unerwünschten Erwärmung der Kontaktelemente kommen. Eine derartige unkontrollierte Erwärmung führt zu einem erhöhten Widerstand an den Kontaktelementen und kann auch zu einer Beschädigung der Kontaktelemente führen.

Hierdurch ist bei herkömmlichen akkubetriebenen Werkzeugmaschinen nicht nur die Handhabung, sondern auch die Stromtragfähigkeit der Kontaktelemente beeinträchtigt.

Aufgabe der vorliegenden Erfindung ist es daher, eine Werkzeugmaschine mit einer verbesserten Schnittstelle zwischen dem Akkumulator und der Werkzeugmaschine bereitzustellen, mit der die vorstehend genannten Probleme gelöst sowie eine erhöhte Stromtragfähigkeit der Kontaktelemente erreicht werden kann.

Die Aufgabe wird gelöst durch den Gegenstand des unabhängigen Anspruchs 1. Vorteilhafte Ausführungsformen des erfindungsgemäßen Gegenstands sind in den abhängigen Ansprüchen enthalten.

Die Aufgabe wird insbesondere gelöst durch eine Werkzeugmaschine, beispielsweise eine Bohrmaschine, enthaltend eine Aufnahmevorrichtung mit wenigstens einem ersten und zweiten Leistungsaufnahmeelement und eine mit der Werkzeugmaschine verbindbare Energieversorgungseinheit, beispielsweise einen Akkumulator, mit einer Anschlusseinrichtung, wobei die Anschlusseinrichtung wenigstens ein erstes und zweites Leistungsabgabeelement enthält, wobei die Aufnahmevorrichtung ausgestaltet ist, um die Anschlusseinrichtung aufzunehmen und zu halten, sodass die Leistungsaufnahmeelemente und die Leistungsabgabeelemente zum Herstellen einer elektrischen Verbindung miteinander verbindbar sind.

Erfindungsgemäß ist vorgesehen, dass sowohl das erste als auch zweite Leistungsaufnahmeelement einen Pluspol sowie einen Minuspol und sowohl das erste als auch zweite Leistungsabgabeelement einen Pluspol sowie einen Minuspol enthält, sodass jeweils ein Pluspol mit einem Pluspol sowie ein Minuspol und ein Minuspol in Verbindung stehen, wenn die Aufnahmevorrichtung und die Anschlusseinrichtung miteinander verbunden sind, wobei der Pluspol des ersten Leistungsabgabeelements und der Pluspol des zweiten Leistungsabgabeelements, der Pluspol des ersten Leistungsaufnahmeelements und der Pluspol des zweiten Leistungsaufnahmeelements, der Minuspol des ersten Leistungsabgabeelements und der Minuspol des zweiten Leistungsabgabeelements sowie der Minuspol des ersten Leistungsaufnahmeelements und der Minuspol des zweiten Leistungsaufnahmeelements in wenigstens einer ersten und zweiten Richtung voneinander entfernt positioniert sind.

Es ist vorgesehen, dass die Aufnahmevorrichtung ausgestaltet ist elektrische Energie und/oder Daten bzw. Signale zu empfangen. Die Aufnahmevorrichtung ist damit sowohl eine Art Empfänger für die elektrische Energie bzw. den Strom als auch für Daten und Signale, die von der Energieversorgungseinheit zu der Werkzeugmaschine gesendet werden.

Eine hohe Anzahl an Kontaktelementen an der Schnittstelle bewirkt, dass eine erhöhte Anpresskraft aufgebracht werden muss, wenn der Akkumulator und die Werkzeugmaschine miteinander verbunden werden. Grund hierfür ist die Überwindung des mechanischen Widerstands von mehreren Kontaktelementen, insbesondere wenn diese Kontaktelemente in Form von Klemmen mit elastisch verformbaren Platten zur Aufnahme von stiftartigen Steckern ausgestaltet sind.

Entsprechend einer vorteilhaften Ausführungsform der vorliegenden Erfindung kann daher vorgesehen sein, dass der Pluspol des ersten Leistungsabgabeelements und der Pluspol des zweiten Leistungsabgabeelements, der Pluspol des ersten Leistungsaufnahmeelements und der Pluspol des zweiten Leistungsaufnahmeelements, der Minuspol des ersten Leistungsabgabeelements und der Minuspol des zweiten Leistungsabgabeelements sowie der Minuspol des ersten Leistungsaufnahmeelements und der Minuspol des zweiten Leistungsaufnahmeelements in wenigstens einer dritten Richtung voneinander entfernt positioniert sind. Durch die Abstände zwischen den einzelnen Leistungsabgabeelementen und Leistungsaufnahmeelementen kann auf einfache Art und Weise eine verbesserte Wärmeabfuhr von den Leistungsabgabeelementen und Leistungsaufnahmeelementen erreicht werden.

Gemäß einer weiteren vorteilhaften Ausführungsform der vorliegenden Erfindung kann vorgesehen sein, dass an dem Pluspol und Minuspol der Leistungsabgabeelemente jeweils ein Federelement vorgesehen ist, wodurch der Pluspol und Minuspol in eine erste und zweite Richtung sowie relativ zu dem Pluspol und Minuspol der Leistungsaufnahmeelemente beweglich ist, sodass einer Relativbewegung zwischen dem jeweiligen Pluspol und Minuspol der Leistungsabgabeelemente und dem Pluspol und Minuspol der Leistungsaufnahmeelemente entgegenwirkbar ist, wenn Leistungsabgabeelemente und Leistungsaufnahmeelemente miteinander verbunden sind. Hierdurch kann einer Relativbewegung zwischen den jeweiligen Pluspolen und Minuspolen reduziert und somit der vibrationsbedingte Verschleiß an den Pluspolen und Minuspolen entgegengewirkt werden.

Gemäß einer alternativen Ausgestaltungsform ist es jedoch auch möglich, dass das Federelement als ein Bauteil mit einem elastisch verformbaren Werkstoff ausgestaltet ist. Als Werkstoff ist dabei Elastomer möglich. Hierdurch kann auf einfache Art und Weise einer vibrationsbedingten Bewegung des Kontaktelements in mehreren Richtungen, d.h. nicht nur in der Richtung zu oder entgegen dem Aufnahmeelement, entgegengewirkt werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine Seitenansicht einer erfindungsgemäßen Werkzeugmaschine mit einem an der Werkzeugmaschine angeschlossenen Akkumulator;
- Fig. 2: eine weitere Seitenansicht der erfindungsgemäßen Werkzeugmaschine mit einem von der Werkzeugmaschine abgenommenen Akkumulator;
- Fig. 3: eine perspektivische Ansicht auf eine Anschlusseinrichtung des Akkumulators gemäß einer ersten Ausführungsform;
- Fig. 4: eine Seitenansicht auf die Anschlusseinrichtung des Akkumulators gemäß der ersten Ausführungsform;
- Fig. 5: eine perspektivische Ansicht auf die Anschlusseinrichtung des Akkumulators gemäß einer zweiten Ausführungsform; und
- Fig. 6: eine Seitenansicht auf die Anschlusseinrichtung des Akkumulators gemäß der zweiten Ausführungsform.

### Ausführungsbeispiele:

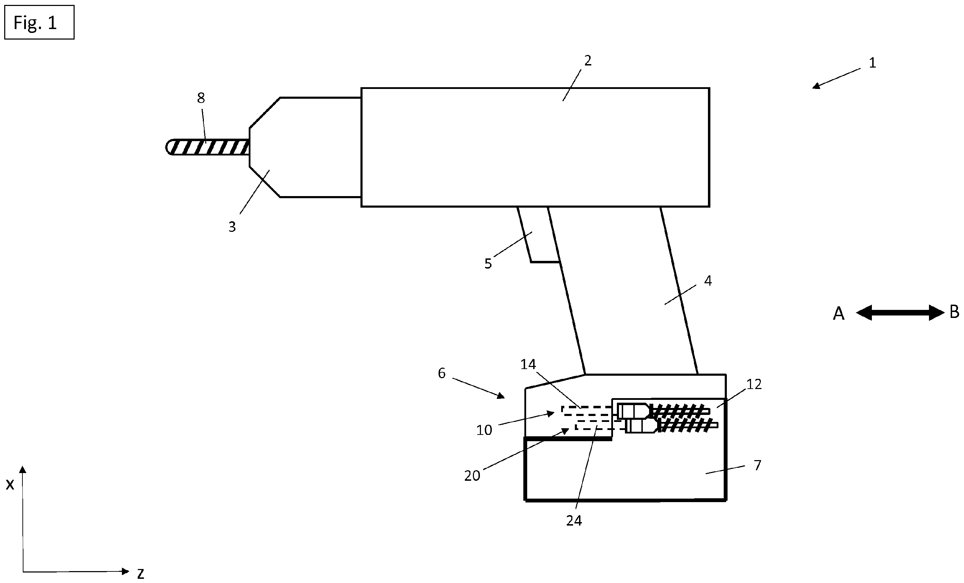

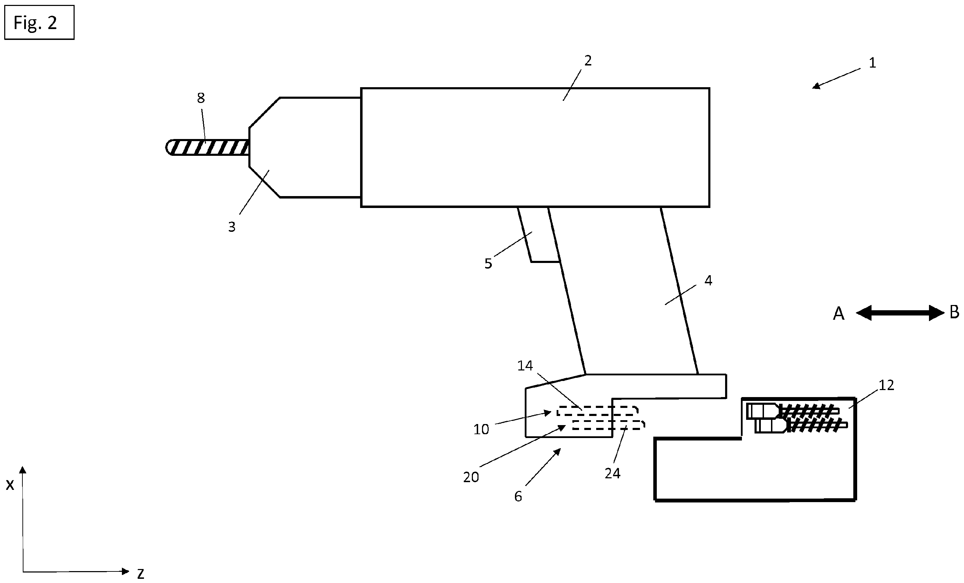

In den Figuren 1 und 2 ist eine beispielhafte Ausführungsform der erfindungsgemäßen Werkzeugmaschine 1 dargestellt.

Die Werkzeugmaschine 1 ist dabei in Form einer Bohrmaschine ausgestaltet. Es ist jedoch auch möglich, dass es sich bei der Werkzeugmaschine 1 um einen Bohrhammer, eine Kreissäge oder dergleichen handelt.

Die in den Figuren 1 und 2 dargestellte Werkzeugmaschine 1 enthält im Wesentlichen ein Gehäuse 2, eine Werkzeugaufnahme 3, einen Handgriff 4 mit einem Aktivierungsschalter 5. Des Weiteren enthält die Werkzeugmaschine 1 eine Aufnahmevorrichtung 6 für eine Energieversorgungseinheit 7. Wie in den Figuren 1 und 2 gezeigt, ist die Energieversorgungseinheit 7 als Akkumulator, auch Akku genannt, ausgestaltet.

In Figur 1 ist ein Zustand dargestellt, bei dem der Akku 7 mit der Werkzeugmaschine 1 verbunden ist. Der Akku 7 wird hierzu in Pfeilrichtung A auf die Aufnahmevorrichtung 6 geschoben. Wie in Figur 2 dargestellt, kann der Akku 7 entsprechend der Pfeilrichtung B wieder von der Aufnahmevorrichtung 6 und damit von der Werkzeugmaschine 1 entfernt werden.

Das Gehäuse 2 weist ein erstes Ende 2a und ein zweites Ende 2b auf. An einem ersten Ende 2a des Gehäuses 2 ist die Werkzeugaufnahme 3 positioniert. Die Werkzeugaufnahme 3 dient zum Aufnahmen und wiederlösbaren Halten eines Werkzeugs 8. Das in den Figuren 1 und 2 gezeigte Werkzeug 8 ist in Form eines Bohrers ausgestaltet.

Der Handgriff 4 enthält den Aktivierungsschalter 5, ein erstes Ende 4a sowie ein zweites Ende 4b. Der Aktivierungsschalter 5 dient zum Betätigen der Werkzeugmaschine 1.

An einem zweiten Ende 2b des Gehäuses 2 und unterhalb des Gehäuses 2 ist das erste Ende 4a des Handgriffs 4 befestigt.

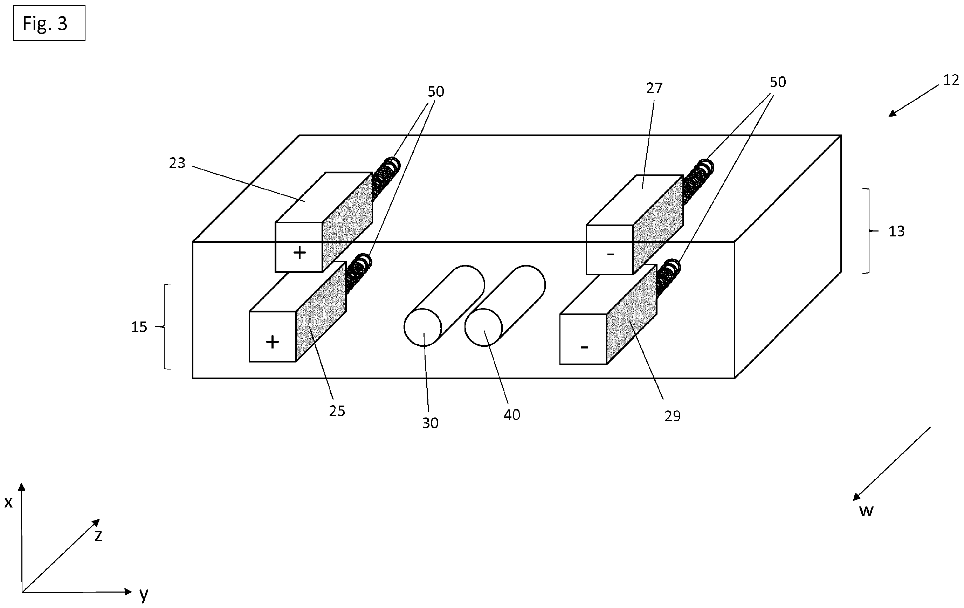

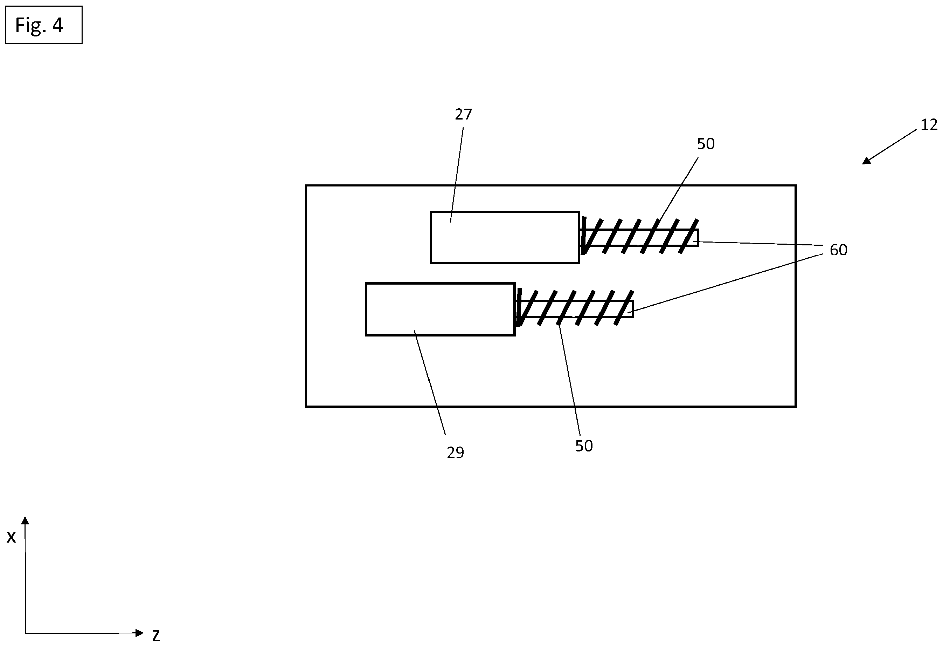

An dem zweiten Ende 4b des Handgriffs 4 ist die Aufnahmevorrichtung 6 für die als Akku ausgestaltete Energieversorgungseinheit 7 positioniert. Wie in Figur 3 und 4 dargestellt, enthält die Aufnahmevorrichtung 6 ein erstes Leistungsaufnahmeelement 10 und zweites Leistungsaufnahmeelement 20 sowie zwei Datenaufnahmeelemente. Die beiden Datenaufnahmeelemente sind in der Aufnahmevorrichtung 6 zwischen dem ersten Leistungsaufnahmeelement 10 und dem zweiten Leistungsaufnahmeelement 20 positioniert und damit in der Mitte der Aufnahmevorrichtung 6. Die Datenaufnahmeelemente sind in den Figuren lediglich angedeutet.

Darüber hinaus enthält das erste Leistungsaufnahmeelement 10 einen Pluspol sowie einen Minuspol 14 und das zweite Leistungsaufnahmeelement 20 einen Pluspol sowie einen Minuspol 24. Die Pluspole sind dabei parallel zueinander sowie versetzt übereinander angeordnet und befinden sich auf einer ersten Seite der Aufnahmevorrichtung 6. Die Minuspole 14, 24 sind ebenfalls parallel zueinander sowie versetzt übereinander angeordnet und auf einer zweiten Seite der Aufnahmevorrichtung 6. Die Pluspole und Minuspole 22, 24 dienen zur Herstellen einer elektrischen Verbindung sowie zum eigentlichen Aufnahmen des elektrischen Stroms von dem Akku 7 und Weiterleiten an einen elektrischen Verbraucher in der Werkzeugmaschine 1. Die Pluspole sind in den Figuren nicht dargestellt.

Die als Akku ausgestaltete Energieversorgungseinheit 7 enthält im Wesentlichen ein Gehäuse 11, in dem eine Anzahl an einzelnen miteinander verbundenen Energiespeicherzellen, auch Akkuzellen genannt, positioniert sind. Mit Hilfe der Akkuzellen kann elektrische Energie in dem Akku 7 gespeichert werden. Die Akkuzellen sind in den Figuren nicht dargestellt.

An einem oberen Ende des Gehäuses 11 ist eine Anschlusseinrichtung 12 positioniert. Die Anschlusseinrichtung 12 enthält ein erstes Leistungsabgabeelement 13 und zweites Leistungsabgabeelement 15. Wie in der Figur 3 dargestellt, ist das erste Leistungsabgabeelement 13 über dem zweiten Leistungsabgabeelement 15 (d.h. entgegen der Pfeilrichtung X) positioniert.

Darüber hinaus enthält das erste Leistungsaufnahmeelement 13 einen Pluspol 23 sowie einen Minuspol 25 und das zweite Leistungsaufnahmeelement 15 enthält einen Pluspol 27 sowie einen Minuspol 27. Die Pluspole 23, 27 sind dabei parallel zueinander sowie versetzt übereinander angeordnet und befinden sich auf einer ersten Seite 6a der Anschlusseinrichtung 12. Die Minuspole 25, 29 sind ebenfalls parallel zueinander sowie versetzt übereinander angeordnet und befinden sich auf einer zweiten Seite 6b der Aufnahmevorrichtung 6. Die Pluspole 23, 27 und Minuspole 25, 29 dienen ebenso zur Herstellen einer elektrischen Verbindung sowie zum eigentlichen Abgeben des elektrischen Stroms (bzw. der elektrischen Energie) von dem Akku 7 an die Werkzeugmaschine 1.

Es ist jedoch auch möglich, gemäß einer alternativen, nicht gezeigten Ausgestaltungsform, dass mehr als zwei Leistungsabgabeelemente 13, 15 mit mehr als jeweils einem Pluspol 23, 27 und einem Minuspol 25, 29 in der Anschlusseinrichtung 12 enthalten sind.

Es ist dabei zu beachten, dass die Anzahl der Leistungsabgabeelemente 13, 15 der Anzahl der Leistungsaufnahmeelemente 10 entspricht. Zwischen den beiden Leistungsabgabeelementen 13, 15 sind zwei Datenabgabeelemente 30, 40 positioniert (vgl. Figur 3 und 4). Die beiden Datenabgabeelemente 30, 40 sind so ausgestaltet, dass diese mit den beiden Datenaufnahmeelementen 30, 40 der Aufnahmevorrichtung 6 verbunden werden können.

Gemäß einer ersten Ausführungsform der vorliegenden Erfindung ist der Pluspol 23 des ersten Leistungsabgabeelements 13 in einer Richtung Z und X zu dem Pluspol 27 des zweiten Leistungsabgabeelements 15 versetzt angeordnet.

Ebenso ist der Minuspol 27 des ersten Leistungsabgabeelements 13 in einer Richtung Z und X zu dem Minuspol 29 des zweiten Leistungsabgabeelements 15 versetzt angeordnet.

Die Leistungsaufnahmeelemente 10 der Aufnahmevorrichtung 6 und die Leistungsabgabeelemente 13, 15 der Anschlusseinrichtung 12 können wieder lösbar miteinander verbunden werden. Dabei stehen die Pluspole der Leistungsaufnahmeelemente mit den Pluspolen 23, 25 der Leistungsabgabeelemente 13, 15 sowie die Minuspole 14, 24 der Leistungsaufnahmeelemente 10 mit den Minuspolen 27, 29 der Leistungsabgabeelemente 13, 15 miteinander in Verbindung zur Bildung einer elektrischen Kontaktierung. Durch die Verbindung der jeweiligen Pluspole 23, 25 und Minuspole 14, 24, 27, 29 kann die in den Akkuzellen gespeicherte elektrische Energie (bzw. Strom) von dem Akku 7 in die Aufnahmevorrichtung 6 geleitet werden. Die elektrische Energie wird anschließend an elektrische Verbraucher in der Werkzeugmaschine 1 weitergeleitet.

Durch die versetzte Anordnung der Pluspole 23, 25 und Minuspole 27, 29 der Leistungsabgabeelemente 13, 15 ist zwingend erforderlich, dass die Pluspole und Minuspole 14, 24 der Leistungsaufnahmeelemente 13 ebenfalls versetzt angeordnet sind. Hierbei ist zu beachten, dass gemäß des in Figur 3 und 4 angedeuteten Ausführungsbeispiels der Pluspol 23 des ersten Leistungsaufnahmeelements 13 um dieselbe Wegstrecke in Richtung Z versetzt angeordnet ist wie auch der Pluspol des ersten Leistungsaufnahmeelements in Richtung Z versetzt angeordnet ist. Ebenso ist der Minuspol 27 des ersten Leistungsaufnahmeelements 13 um dieselbe Wegstrecke in Richtung Z versetzt angeordnet ist wie auch der Minuspol 14 des ersten Leistungsaufnahmeelements 13 in Richtung Z versetzt angeordnet ist. Anderenfalls können die entsprechenden Pole nicht miteinander verbunden werden, wenn die Aufnahmevorrichtung 6 und die Anschlusseinrichtung 12 zusammengefügt sind.

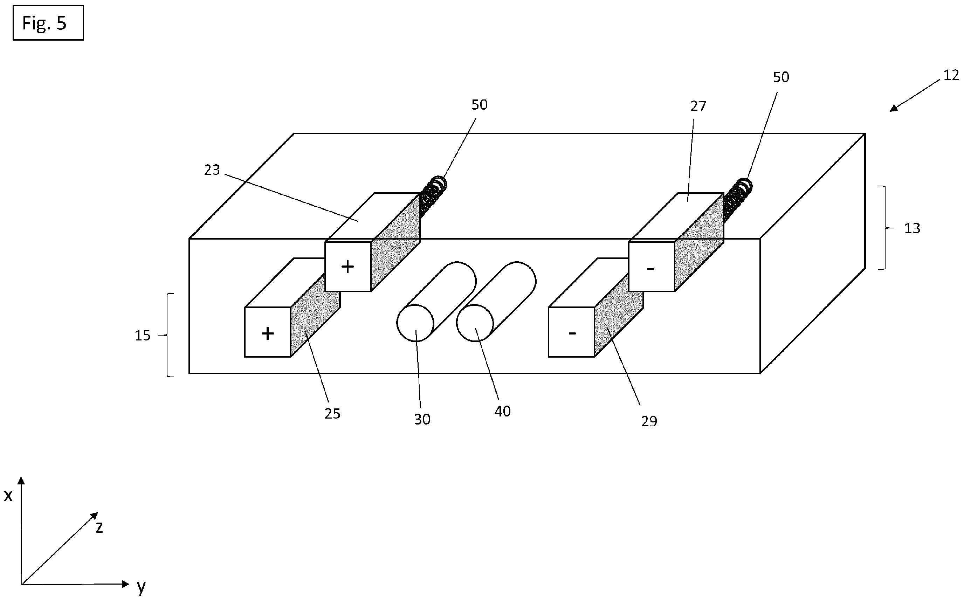

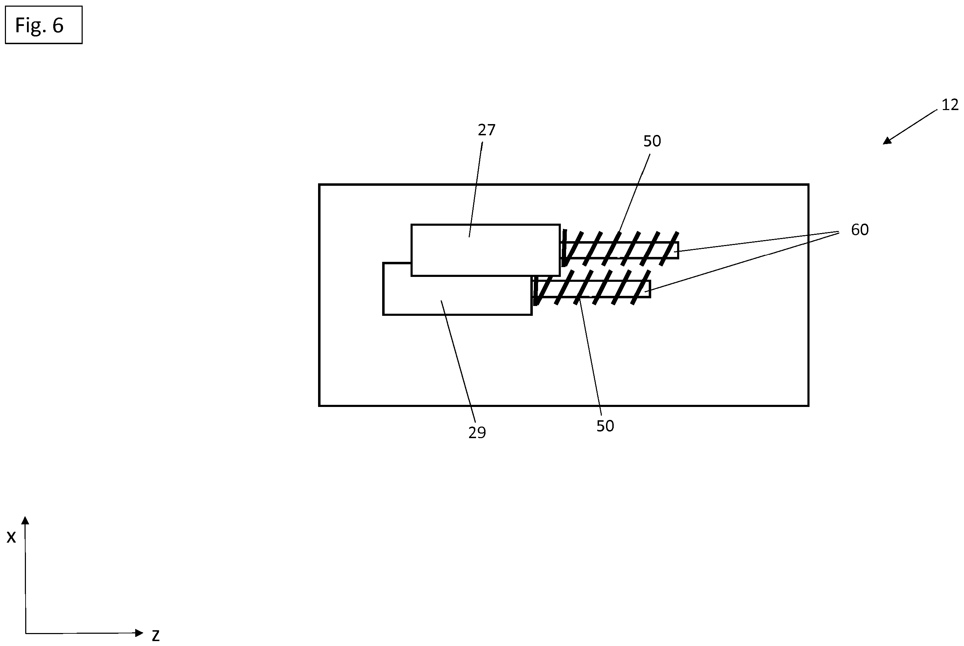

Figur 5 und 6 zeigt ein zweites Ausführungsbeispiel, wonach der Pluspol 23 des ersten Leistungsabgabeelements 13 in einer Richtung Z, X und Y gegenüber dem Pluspol 25 des zweiten Leistungsabgabeelements 15 versetzt angeordnet ist. Ebenso ist der 27 Minuspol des ersten Leistungsabgabeelements 13 in einer Richtung Z, X und Y gegenüber dem Minuspol 29 des zweiten Leistungsabgabeelements 15 versetzt angeordnet ist. Auf entsprechende Weise sind auch die Pluspole und Minuspole 14, 24 der Leistungsaufnahmeelemente 10 der Aufnahmevorrichtung 6 in die Richtung Z, X und Y versetzt angeordnet, sodass die Pluspole sowie Minuspole der Leistungsaufnahmeelemente 10 der Aufnahmevorrichtung 6 und die Pluspole 23, 25 sowie Minuspole 27, 29 der Leistungsabgabeelemente 13, 15 der Anschlusseinrichtung 12 miteinander verbunden werden, wenn die Aufnahmevorrichtung 6 und die Anschlusseinrichtung 12 zusammengefügt sind.

In dem Gehäuse 2 ist ein Elektromotor zum Erzeugen eines Drehmoments positioniert. Der Elektromotor ist damit ein elektrischer Verbraucher. Das in dem Elektromotor erzeugte Drehmoment wird über eine Abtriebswelle und ein Getriebe auf die Werkzeugaufnahme 3 übertragen. Mit Hilfe des übertragenen Drehmoments wird das Werkzeug 8 gedreht. In den Figuren ist weder der Elektromotor, die Abtriebswelle noch das Getriebe gezeigt.

Gemäß einer weiteren Ausführungsform der vorliegenden Erfindung kann vorgesehen sein, dass die einzelnen Pluspole 23, 25 und Minuspole 27, 29 der Leistungsabgabeelemente 13, 15 mit jeweils einem Federelement 50 verbunden sind. Wie insbesondere in Figur 3 bis 6 angedeutet, ist das Federelement 50 in Richtung Z hinter dem jeweiligen Pluspol 23, 25 und Minuspol 27, 29 positioniert. Das Federelement 50 erstreckt sich dabei in Richtung Z. Wie insbesondere in Figur 4 und 6 gezeigt, ist das jeweilige Federelement 50 um eine Litze 60 positioniert. Jeder Pluspol 23, 25 und Minuspol 27, 29 weist eine derartige Litze 60 auf. Die Litzen 60 dienen der Übertragung der elektrischen Energie von den Akkuzellen an den jeweiligen Pluspol 23, 25 und Minuspol 27, 29.

Des Weiteren befinden sich die einzelnen Pluspole 23, 25 und Minuspole 27, 29 in einer Kontaktkammer. Die jeweiligen Federelemente 50 sind in den Kontaktkammern so positioniert, dass die jeweilige Federkraft der Federelemente 50 die Pluspole 23, 25 und Minuspole 27, 29 gegen die Richtung Z drücken. Die Kontaktkammer sind in den Figuren nicht dargestellt.

Jeder Pluspol 23, 25 und Minuspol 27, 29 enthält des Weiteren ein erstes und zweites Kontaktblatt. Die Kontaktblätter sind beweglich bzw. flexibel ausgestaltet, sodass das erste Kontaktblatt in eine erste Richtung und das zweite Kontaktblatt in andere Richtung reversibel geschwenkt werden kann. Die Beweglichkeit der Kontaktblätter dient dazu, die jeweiligen Pluspole 23, 25 und Minuspole 27, 29 der Leistungsaufnahmeelemente 13, 15 der Aufnahmevorrichtung 12 aufnehmen zu können, sodass jeder Pluspol 23, 25 und jeder Minuspol 27, 29 aneinander anliegen, wenn der Akku 7 ordnungsgemäß mit der Werkzeugmaschine 1 verbunden ist (vgl. Fig. 1).

Mit Hilfe des Federelements 50 können vibrationsbedingte Relativbewegungen (in Pfeilrichtung A und B), die entstehen, wenn die Werkzeugmaschine 1 in Verwendung ist, zwischen den jeweiligen Pluspolen 23, 25 und Minuspolen 14, 24, 27, 29 ausgeglichen werden.

## Patentansprüche

1. Werkzeugmaschine (1), beispielsweise eine Bohrmaschine, enthaltend
- eine Aufnahmevorrichtung (6) mit wenigstens einem ersten und zweiten Leistungsaufnahmeelement (10); und
- eine mit der Werkzeugmaschine (1) verbindbare Energieversorgungseinheit (7), beispielsweise einen Akkumulator, mit einer Anschlusseinrichtung (12), wobei die Anschlusseinrichtung (12) wenigstens ein erstes und zweites Leistungsabgabeelement (13, 15) enthält;
wobei die Aufnahmevorrichtung (6) ausgestaltet ist, um die Anschlusseinrichtung (12) aufzunehmen und zu halten, sodass die Leistungsaufnahmeelemente (10) und die Leistungsabgabeelemente (13, 15) zum Herstellen einer elektrischen Verbindung miteinander verbindbar sind,
**dadurch gekennzeichnet, dass** sowohl das erste als auch zweite Leistungsaufnahmeelement (10) einen Pluspol sowie einen Minuspol (14, 24) und sowohl das erste als auch zweite Leistungsabgabeelement (13, 15) einen Pluspol (23, 25) sowie einen Minuspol (27, 29) enthält, sodass jeweils ein Pluspol mit einem Pluspol sowie ein Minuspol und ein Minuspol in Verbindung stehen, wenn die Aufnahmevorrichtung (6) und die Anschlusseinrichtung (12) miteinander verbunden sind, wobei der Pluspol (23) des ersten Leistungsabgabeelements (13) und der Pluspol (25) des zweiten Leistungsabgabeelements (15), der Pluspol des ersten Leistungsaufnahmeelements und der Pluspol des zweiten Leistungsaufnahmeelements, der Minuspol (27) des ersten Leistungsabgabeelements (13) und der Minuspol (29) des zweiten Leistungsabgabeelements (15) sowie der Minuspol (14) des ersten Leistungsaufnahmeelements (10) und der Minuspol (24) des zweiten Leistungsaufnahmeelements in wenigstens einer ersten und zweiten Richtung (X, Y) voneinander entfernt positioniert sind.

2. Werkzeugmaschine (1) nach Anspruch 1,
**dadurch gekennzeichnet, dass** der Pluspol (23) des ersten Leistungsabgabeelements (13) und der Pluspol (25) des zweiten Leistungsabgabeelements (15), der Pluspol des ersten Leistungsaufnahmeelements (10) und der Pluspol des zweiten Leistungsaufnahmeelements, der Minuspol (27) des ersten Leistungsabgabeelements (13) und der Minuspol (29) des zweiten Leistungsabgabeelements (15) sowie der Minuspol (14) des ersten Leistungsaufnahmeelements (10) und der Minuspol (24) des zweiten Leistungsaufnahmeelements in wenigstens einer dritten Richtung (Z) voneinander entfernt positioniert sind.

3. Werkzeugmaschine (1) nach Anspruch 1 oder 2,
**dadurch gekennzeichnet, dass** an dem Pluspol (23, 25) und Minuspol (27, 29) der Leistungsabgabeelemente (13, 15) jeweils ein Federelement (50) vorgesehen ist, wodurch der Pluspol (23, 25) und Minuspol (27, 29) in eine erste und zweite Richtung (W, Z) sowie relativ zu dem Pluspol und Minuspol der Leistungsaufnahmeelemente beweglich ist, sodass einer Relativbewegung zwischen dem jeweiligen Pluspol (23, 25) und Minuspol (27, 29) der Leistungsabgabeelemente (13, 15) und dem Pluspol und Minuspol der Leistungsaufnahmeelemente entgegenwirkbar ist, wenn Leistungsabgabeelemente (13, 15) und Leistungsaufnahmeelemente (10) miteinander verbunden sind.

## Claims

1. Power tool (1), for example a power drill, comprising
- a receiving device (6) having at least a first and a second power consuming element (10); and
- an energy supply unit (7), for example a rechargeable battery, which can be connected to the power tool (1) and has a connecting device (12), the connecting device (12) comprising at least a first and a second power output element (13, 15);
the receiving device (6) being designed to receive and hold the connecting device (12), so that the power consuming elements (10) and the power output elements (13, 15) can be connected to one another to establish an electrical connection,
**characterized in that** both the first and the second power consuming element (10) comprise a positive terminal and a negative terminal (14, 24) and both the first and the second power output element (13, 15) comprise a positive terminal (23, 25) and a negative terminal (27, 29), so that in each case a positive terminal is in connection with a positive terminal and a negative terminal is in connection with a negative terminal when the receiving device (6) and the connecting device (12) are connected to one another, the positive terminal (23) of the first power output element (13) and the positive terminal (25) of the second power output element (15), the positive terminal of the first power consuming element and the positive terminal of the second power consuming element, the negative terminal (27) of the first power output element (13) and the negative terminal (29) of the second power output element (15) and also the negative terminal (14) of the first power consuming element (10) and the negative terminal (24) of the second power consuming element being positioned at a distance from one another in at least a first and a second direction (X, Y).

2. Power tool (1) according to Claim 1,
**characterized in that** the positive terminal (23) of the first power output element (13) and the positive terminal (25) of the second power output element (15), the positive terminal of the first power consuming element (10) and the positive terminal of the second power consuming element, the negative terminal (27) of the first power output element (13) and the negative terminal (29) of the second power output element (15) and also the negative terminal (14) of the first power consuming element (10) and the negative terminal (24) of the second power consuming element are positioned at a distance from one another in at least a third direction (Z).

3. Power tool (1) according to Claim 1 or 2,
**characterized in that** a spring element (50) is respectively provided at the positive terminal (23, 25) and negative terminal (27, 29) of the power output elements (13, 15), whereby the positive terminal (23, 25) and the negative terminal (27, 29) are movable in a first and a second direction (W, Z) and also in relation to the positive terminal and negative terminal of the power consuming elements, so that a relative movement between the respective positive terminal (23, 25) and negative terminal (27, 29) of the power output elements (13, 15) and the positive terminal and negative terminal of the power consuming elements can be counteracted if the power output elements (13, 15) and power consuming elements (10) are connected to one another.

## Revendications

1. Machine-outil (1), par exemple une perceuse, comprenant
- un dispositif consommateur (6) doté d'au moins un premier et un deuxième élément de consommation de puissance (10) ; et
- une unité d'alimentation en énergie (7), par exemple un accumulateur, pouvant être reliée à la machine-outil (1), dotée d'un dispositif de connexion (12), le dispositif de connexion (12) comprenant au moins un premier et un deuxième élément de sortie de puissance (13, 15) ;
le dispositif consommateur (6) étant configuré pour recevoir et maintenir le dispositif de connexion (12) de sorte que les éléments de consommation de puissance (10) et les éléments de sortie de puissance (13, 15) peuvent être reliés les uns aux autres pour établir une connexion électrique,
**caractérisée en ce qu'à** la fois le premier et le deuxième élément de consommation de puissance (10) comprennent un pôle positif ainsi qu'un pôle négatif (14, 24) et qu'à la fois le premier et le deuxième élément de sortie de puissance (13, 15) comprennent un pôle positif (23, 25) ainsi qu'un pôle négatif (27, 29), de sorte que respectivement un pôle positif est en communication avec un pôle positif et un pôle négatif est en communication avec un pôle négatif lorsque le dispositif consommateur (6) et le dispositif de connexion (12) sont reliés l'un à l'autre, dans laquelle le pôle positif (23) du premier élément de sortie de puissance (13) et le pôle positif (25) du deuxième élément de sortie de puissance (15), le pôle positif du premier élément de consommation de puissance et le pôle positif du deuxième élément de consommation de puissance, le pôle négatif (27) du premier élément de sortie de puissance (13) et le pôle négatif (29) du deuxième élément de sortie de puissance (15), ainsi que le pôle négatif (14) du premier élément de consommation de puissance (10) et le pôle négatif (24) du deuxième élément de consommation de puissance sont positionnés à distances les uns des autres au moins dans une première et une deuxième direction (X, Y).

2. Machine-outil (1) selon la revendication 1, **caractérisée en ce que** le pôle positif (23) du premier élément de sortie de puissance (13) et le pôle positif (25) du deuxième élément de sortie de puissance (15), le pôle positif du premier élément de consommation de puissance (10) et le pôle positif du deuxième élément de consommation de puissance, le pôle négatif (27) du premier élément de sortie de puissance (13) et le pôle négatif (29) du deuxième élément de sortie de puissance (15), ainsi que le pôle négatif (14) du premier élément de consommation de puissance (10) et le pôle négatif (24) du deuxième élément de consommation de puissance sont positionnés à distance les uns des autres au moins dans une troisième direction (Z).

3. Machine-outil (1) selon la revendication 1 ou 2, **caractérisée en ce que** respectivement un élément de ressort (50) est prévu au niveau du pôle positif (23, 25) et du pôle négatif (27, 29) des éléments de sortie de puissance (13, 15), de sorte que le pôle positif (23, 25) et le pôle négatif (27, 29) sont mobiles dans une première et une deuxième direction (W, Z) ainsi que par rapport au pôle positif et au pôle négatif des éléments de consommation de puissance, de sorte qu'un mouvement relatif entre le pôle positif (23, 25) et le pôle négatif (27, 29) respectifs des éléments de sortie de puissance (13, 15) et le pôle positif et le pôle négatif des éléments de consommation de puissance peut être contré lorsque les éléments de sortie de puissance (13, 15) et les éléments de consommation de puissance (10) sont reliés les uns aux autres.
